# DEMANDE DE BREVET EUROPEEN

(11) **EP 3 835 719 A1**
(43) Date de publication de la demande: **16.06.2021**
(21) Numéro de dépôt: 20213441.7
(22) Date de dépôt: 11.12.2020
(51) Int. Cl.: G01B 11/02, G01B 11/04, B65H 61/00, B65H 16/00, B65H 49/08, F41G 7/32, F42B 15/04, F42B 19/01

(54) **SYSTÈME DE DÉTERMINATION DE LA DISTANCE PARCOURUE PAR UN VÉHICULE SOUS-MARIN À PARTIR D'UN ENGIN SOUS-MARIN**

(30) Priorité: 11.12.2019 FR 1914128
(71) Demandeur: Naval Group, 75015 Paris (FR)
(72) Inventeur: THIRIOT, André, 83997 SAINT TROPEZ CEDEX (FR)
(74) Mandataire: Lavoix

(57) **Abrégé**

Ce système de détermination de la distance parcourue par un véhicule sous-marin (1) lancé à partir d'un engin sous-marin et raccordé à celui-ci par des moyens de transmission d'informations (2), lovés sous la forme d'une bobine de spires creuse (3) se dévidant par son centre lors du déplacement du véhicule sous-marin, est caractérisé en ce qu'il comporte des moyens (4, 5) de détermination du nombre de spires délovées pour déterminer la distance parcourue par le véhicule sous-marin.

## Description

La présente invention concerne un système de détermination de la distance parcourue par un véhicule sous-marin lancé à partir d'un engin sous-marin.

Un tel système de détermination trouve des applications par exemple pour déterminer la distance parcourue par une arme telle qu'une torpille, lancée à partir d'un sous-marin proprement dit.

On sait que d'une façon générale, une torpille de cette nature est lancée à partir d'un tube lance-torpille du sous-marin et peut être raccordée au moins dans un premier temps de son déplacement, au reste des circuits du sous-marin par l'intermédiaire de moyens de transmission d'informations.

Ces moyens de transmission d'informations permettent par exemple d'échanger des informations entre le sous-marin et la torpille afin d'assurer un guidage de cette torpille.

Ces moyens de transmission d'informations peuvent par exemple comporter au moins une fibre optique.

Bien entendu d'autres types de moyens de transmission peuvent être envisagés.

Au moins une partie de cette fibre optique est alors logée dans une gaine de protection.

Ceci permet d'éviter toute dégradation de cette fibre contre des parties du sous-marin.

Cette fibre et la gaine sont en effet lovées sous la forme d'une bobine de spires creuse par exemple dans un boitier à l'arrière de la torpille, cette bobine de spires c'est-à-dire la fibre et la gaine, se dévidant par son centre lors du déplacement du véhicule sous-marin, à l'arrière de celui-ci.

Plusieurs moyens sont connus actuellement pour déterminer la distance parcourue par le véhicule après son lancement.

Ainsi par exemple on peut compter le nombre de tours d'arbre moteur ou d'hélice du véhicule.

On peut également mesurer le déplacement du véhicule voire sa vitesse de déplacement par rapport au fond.

Des moyens de comptage optique de marques portées par les moyens de transmission sont également connus, pour permettre de déterminer la distance parcourue.

Mais tous ces moyens sont relativement complexes à mettre en œuvre et nécessitent l'utilisation de moyens coûteux.

Le but de l'invention est donc de résoudre ces problèmes.

A cet effet, l'invention a pour objet un système de détermination de la distance parcourue par un véhicule sous-marin lancé à partir d'un engin sous-marin et raccordé à celui-ci par des moyens de transmission d'informations, lovés sous la forme d'une bobine de spires creuse se dévidant par son centre lors du déplacement du véhicule sous-marin, caractérisé en ce qu'il comporte des moyens de détermination du nombre de spires délovées pour déterminer la distance parcourue par le véhicule sous-marin.

Suivant d'autres caractéristiques du système selon l'invention, prises seules ou en combinaison :
- les moyens de détermination comprennent des moyens à photo-capteur à réflexion lumineuse activés par les moyens de transmission lors du délovage de chaque spire ;
- les moyens de détermination comprennent des moyens à barrière lumineuse coupés par les moyens de transmission lors du délovage de chaque spire ;
- le véhicule sous-marin est une torpille, les moyens de transmission d'informations comprennent au moins une fibre optique et l'engin sous-marin est un sous-marin proprement dit.

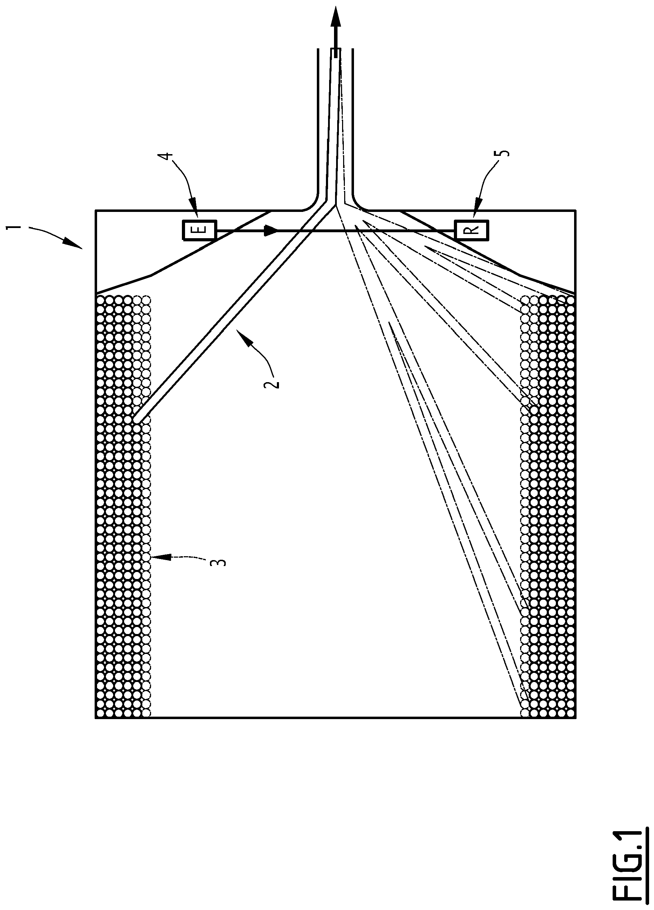

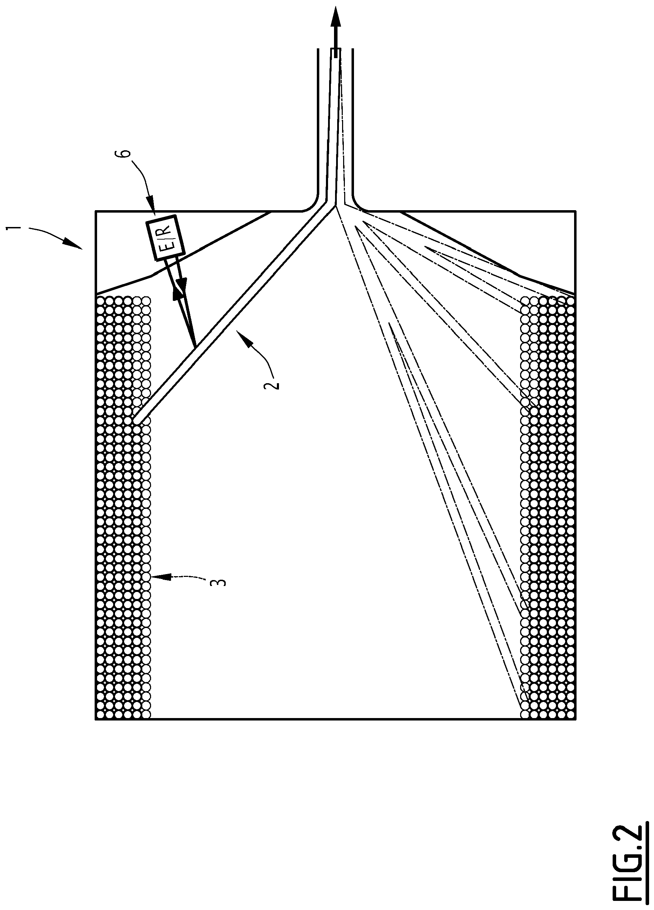

L'invention sera mieux comprise à la lecture de la description qui va suivre, donnée uniquement à titre d'exemple, et faite en se référant aux dessins annexés, sur lesquels les figures 1 et 2 représentent des vues schématiques en coupe d'une partie arrière d'un véhicule sous-marin tel qu'une torpille, illustrant deux exemples de réalisation d'un système de détermination selon l'invention.

On a en effet illustré sur ces figures, deux exemples de réalisation d'un système de détermination de la distance parcourue par un véhicule sous-marin lancé à partir d'un engin sous-marin.

Sur ces figures, l'engin sous-marin qui peut par exemple être constitué par un sous-marin proprement dit, n'est pas représenté.

Le véhicule sous-marin est quant à lui schématisé et désigné par la référence générale 1 sur ces figures et peut par exemple être constitué par une torpille lancée à partir du sous-marin.

Comme cela a été indiqué précédemment, la torpille et le sous-marin sont raccordés par des moyens de transmission d'informations désignés par la référence générale 2 sur ces figures.

Ces moyens de transmission d'informations comprennent par exemple au moins une fibre optique.

Au moins une portion de cette fibre optique est par exemple logée dans une gaine de protection de façon classique.

Comme cela est également illustré sur ces figures, ces moyens de transmission d'informations et la gaine de protection de ceux-ci, sont lovés sous la forme d'une bobine de spires creuse désignée par la référence générale 3 sur ces figures.

Cette bobine de spires creuse se dévide alors par son centre lors du déplacement du véhicule sous-marin comme cela est illustré.

Dans le système selon l'invention, il est prévu des moyens de de détermination du nombre de spires délovées pour déterminer la distance parcourue par le véhicule sous-marin.

Différents modes de réalisation possibles de ces moyens de détermination peuvent être envisagés.

Ainsi par exemple sur la figure 1, on a illustré l'utilisation de moyens à barrière lumineuse coupée par les moyens de transmission d'informations lors du délovage de chaque spire.

Sur la figure 1, la barrière lumineuse est alors formée entre un émetteur de faisceau lumineux désigné par la référence générale 4 et un récepteur correspondant désigné par la référence générale 5, le faisceau lumineux étant coupé par les moyens de transmission 2 lors du délovage de chaque spire.

Bien entendu d'autres modes de réalisation de ces moyens de détermination peuvent être envisagés.

Ainsi par exemple sur la figure 2, on a illustré l'utilisation de moyens à photo-capteur à réflexion lumineuse activés par les moyens de transmission lors du délovage de chaque spire.

Ces moyens à photo-capteur sont désignés par la référence générale 6 sur cette figure 2.

Bien entendu d'autres modes de réalisation encore de ces moyens de détermination peuvent être envisagés.

Le principe de fonctionnement de ce système repose alors sur la détection et le comptage du passage d'une spire des moyens de transmission d'informations en cours de délovage.

La longueur d'une spire de ces moyens étant connue ou pouvant être déterminée avec une précision connue, il est alors possible de calculer la distance parcourue par le véhicule par comptage du nombre de spires délovées.

La vitesse de déplacement du véhicule peut également être estimée.

On conçoit alors qu'un tel système présente un certain nombre d'avantages notamment au niveau de sa simplicité.

## Revendications

1. Système de détermination de la distance parcourue par un véhicule sous-marin (1) lancé à partir d'un engin sous-marin et raccordé à celui-ci par des moyens de transmission d'informations (2), lovés sous la forme d'une bobine de spires creuse (3) se dévidant par son centre lors du déplacement du véhicule sous-marin, **caractérisé en ce qu'**il comporte des moyens (4, 5 ; 6) de détermination du nombre de spires délovées pour déterminer la distance parcourue par le véhicule sous-marin.

2. Système de détermination de la distance parcourue par un véhicule sous-marins lancé à partir d'un engin sous-marin selon la revendication 1, **caractérisé en ce que** les moyens de détermination comprennent des moyens (4, 5) à photo-capteur à réflexion lumineuse activés par les moyens de transmission (2) lors du délovage de chaque spire.

3. Système de détermination de la distance parcourue par un véhicule sous-marins lancé à partir d'un engin sous-marin selon la revendication 1, **caractérisé en ce que** les moyens de détermination comprennent des moyens (4, 5) à barrière lumineuse coupés par les moyens de transmission lors du délovage de chaque spire.

4. Système de détermination de la distance parcourue par un véhicule sous-marins lancé à partir d'un engin sous-marin selon l'une quelconque des revendications précédentes, **caractérisé en ce que** le véhicule sous-marin (1) est une torpille, les moyens de transmission d'informations (2) comprennent au moins une fibre optique et l'engin sous-marin est un sous-marin proprement dit.
